# EUROPÄISCHE PATENTSCHRIFT

(11) **EP 1 656 404 B1**
(45) Veröffentlichungstag und Bekanntmachung des Hinweises auf die Patenterteilung: **01.08.2007**
(21) Anmeldenummer: 04764218.6
(22) Anmeldetag: 17.08.2004
(51) Int. Cl.: C08F 290/06, C04B 24/00, C08F 2/38

(54) **Verwendung von statistischen Kammpolymeren als Dispergiermittel**
Use of statistic comb polymers as dispersing agent
Utilisation de polymères en peigne statistiques comme agent de dispersion

(30) Priorität: 19.08.2003 DE 10337975
(43) Veröffentlichungstag der Anmeldung: 17.05.2006
(73) Patentinhaber: Construction Research & Technology GmbH, 83308 Trostberg (DE)
(72) Erfinder: KRAUS, Alexander, 83552 Evenhausen (DE); ALBRECHT, Gerhard, 83342 Tacherting (DE); HÜBSCH, Christian, 83703 Gmund (DE); GRASSL, Harald, 83471 Schönau (DE); HARTL, Angelika, 83342 Emertsham (DE)
(74) Vertreter: Dey, Michael
(86) Internationale Anmeldenummer: PCT/EP2004/009230
(87) Internationale Veröffentlichungsnummer: WO 2005/019288

(56) Entgegenhaltungen:
- EP-A- 0 826 751
- EP-A- 1 110 981
- WO-A-01/40338
- US-B1- 6 296 698

## Beschreibung

Die vorliegende Erfindung betrifft die Verwendung von statistischen Kammpolymeren, die durch radikalische Polymerisation nach dem "Catalytical Chain Transfer"-Verfahren hergestellt wurden sowie deren Verwendung als Dispergiermittel für wässrige Feststoff-Suspensionen. Sie eignen sich als Zusatzmittel für hydraulische Bindemittel, insbesondere Zement, aber auch Kalk, Gips und Anhydrit. Die Verwendung dieser Copolymere führt zu einer deutlichen Verbesserung der daraus hergestellten Baustoffe während des Verarbeitungs- bzw. Erhärtungsprozesses.

In wässrigen Suspensionen von pulverförmigen anorganischen oder organischen Substanzen, wie hydraulischen Bindemitteln (Zement, Kalk, Gips oder Anhydrit), Gesteinsmehl, Silikatmehl, Kreide, Tonen, Porzellanschlicker, Talkum, Pigmenten, Ruß oder Kunststoffpulvern, werden oft Zusatzmittel in Form von Dispergiermitteln zugesetzt, um ihre Verarbeitbarkeit, d. h. Knetbarkeit, Fließfähigkeit, Spritzbarkeit, Streichfähigkeit oder Pumpbarkeit, zu verbessern. Diese Zusatzmittel sind in der Lage, durch Adsorption an die Oberflächen der Teilchen Agglomerate aufzubrechen und die gebildeten Teilchen zu dispergieren. Dies führt insbesondere bei hochkonzentrierten Dispersionen zu einer deutlichen Verbesserung der Verarbeitbarkeit.

Bei der Herstellung von Baustoffmischungen, die hydraulische Bindemittel wie Zement, Kalk, Gips oder Anhydrit enthalten, lässt sich dieser Effekt besonders vorteilhaft nutzen, da zur Erzielung einer verarbeitbaren Konsistenz ansonsten wesentlich mehr Wasser benötigt würde, als für den nachfolgenden Hydratations- bzw. Erhärtungsprozess erforderlich wäre. Das nach dem Erhärten allmählich verdunstende Wasser hinterlässt Hohlräume, welche die mechanischen Festigkeiten und Beständigkeiten der Baukörper signifikant verschlechtern.

Um den im Sinne der Hydratation überschüssigen Wasseranteil zu reduzieren und/oder die Verarbeitbarkeit bei einem vorgegebenen Wasser/Bindemittel-Verhältnis zu optimieren, werden Zusatzmittel eingesetzt, die im allgemeinen als Wasserreduktions- oder Fließmittel und im Englischen als Superplasticizer bezeichnet werden.

Die nach wie vor am häufigsten verwendeten Fließmittel sind Polykondensationsprodukte auf der Basis von Naphthalin- oder Alkylnaphthahnsulfonsäuren (vgl. EP-A 214 412) sowie MelaminFormaldehyd-Harze, die Sulfonsäuregruppen enthalten (vgl. DE-PS 16 71 017).

Diese Fließmittel haben jedoch den Nachteil, dass ihre gute verflüssigende Wirkung - insbesondere im Betonbau - selbst bei relativ hohen Dosierungen nur über eine relativ kurze Zeitspanne bestehen bleibt. Dieser Abfall der Fließfähigkeit von Betonmischungen wird auch als "Slump-Loss" bezeichnet. Er führt insbesondere dann zu Problemen, wenn zwischen der Herstellung des Betons und dessen Einbau größere Zeitspannen liegen, wie sie sich oft durch lange Transport- oder Förderwege ergeben.

Weiterhin kann die Freisetzung des herstellungsbedingt enthaltenen toxischen Formaldehyds zu beträchtlichen arbeitshygienischen Belastungen führen, wenn die Anwendung im Innenbereich (Betonfertigteilherstellung oder Gipskartonplatten-Trocknung) oder im Berg- bzw. Tunnelbau erfolgt.

Um diese Nachteile zu umgehen, wurden auch formaldehydfreie Fließmittel auf der Basis Maleinsäuremonoestern und Styrol entwickelt (vgl. EP-A 306 449). Zwar kann mit diesen Zusatzmitteln eine hohe Dispergierleistung über einen ausreichenden Zeitraum (geringer Slump-Loss) gewährleistet werden, jedoch gehen diese positiven Eigenschaften bei Lagerung der wässrigen Zubereitungen dieser Fließmittel schnell verloren. Die geringe Lagerstabilität dieser Fließmittellösungen ist auf die leichte Hydrolysierbarkeit der Maleinsäuremonoester zurückzuführen.

Um dieses Problem zu umgehen, wurden verschiedene hydrolysestabile Fließmittel entwickelt. Bei allen diesen Fließmitteln handelt es sich um Copolymere aus ethylenisch ungesättigten Carbonsäuren (wie z. B. Acrylsäure, Methacrylsäure oder Maleinsäure bzw. deren Salze) und Poly(alkylenoxiden) mit einer polymerisierbaren Endgruppe (wie z. B. Methacrylate, Allylether oder Vinylether). Der Einbau dieser langkettigen Monomere in eine Polymerkette führt zu Polymeren mit einer kammartigen Struktur (vgl. US 5,707,445 B1, EP 1 110 981 A2, EP 1 142 847 A2).

Diese Kammpolymere zeichnen sich neben einer hohen Lagerbeständigkeit auch durch eine deutlich verbesserte Wirksamkeit im Vergleich zu Fließmitteln auf Lignin-, Naphthalin- oder Melaminkondensat-Basis aus.

Nach einer weithin akzeptierten Theorie beruht die Wirksamkeit der Fließmittel auf zwei unterschiedlichen Effekten. Zum einen adsorbieren die negativ geladenen Säuregruppen der Fließmittel auf der durch Calciumionen positiv geladenen Zementkornoberfläche. Die so entstehende elektrostatische Doppelschicht (Zeta Potential) führt zu einer elektrostatischen Abstoßung zwischen den Partikeln. Die durch die Zetapotentiale verursachten Abstoßungskräfte haben jedoch nur geringe Reichweiten (vgl. H. Uchikawa, Cement and Concrete Research 27 [1] 37-50 (1997)).

Weiterhin verhindert jedoch auch die physikalische Anwesenheit des adsorbierten Fließmittels, dass die Oberflächen der Zementpartikel in direkten Kontakt miteinander kommen können. Dieser sterische Abstoßungseffekt wird durch die nichtadsorbierten Seitenketten der oben erwähnten Kammpolymere drastisch verstärkt (vgl. K. Yoshioka, J. Am Ceram. Soc. 80 [10] 2667-71 (1997)). Es liegt auf der Hand, dass sich der sterisch bedingte Abstoßungseffekt sowohl durch die Länge der Seitenketten, als auch durch die Anzahl der Seitenketten pro Hauptkette beeinflussen lässt. Andererseits kann eine zu hohe Seitenkettendichte bzw. -länge die Adsorption auf der Zementkornoberfläche behindern. Zur Bestimmung des Adsorptionsgrades eines Fließmittels an Zementpartikeln wird nach Zugabe des Fließmittels zum Anmachwasser dessen Gehalt an organischem Material bestimmt (TOC-Analyse). Nach dem Einrühren des Zements und einer kurzen Wartezeit wird der Zementleim ausgepresst und das gesammelte Porenwasser nochmals mittels TOC analysiert. Die Abnahme des TOC-Wertes entspricht nun dem Anteil des adsorbierten Fließmittels. Anhand solcher Messungen konnte gezeigt werden, dass große Teile des Fließmittels nicht adsorbieren. Dies ist nicht verwunderlich, da die Seitenketten in Lösung nicht gestreckt, sondern vermutlich eher geknäult vorliegen. Dadurch werden Carboxylatgruppen in der unmittelbaren Nachbarschaft der Seitenkette räumlich vom Zementkorn abgeschirmt und können nicht zur Adsorption beitragen.

Darüber hinaus führt die Herstellung der Fließmittel über die freie radikalische Copolymerisation mehrerer verschiedener Monomere zu relativ uneinheitlichen Produkten hinsichtlich Molekulargewicht und Seitenkettendichte. Es ist daher nicht verwunderlich, dass ein Teil dieser Fließmittel nicht an der Zementkornoberfläche adsorbiert, sondern im Porenwasser gelöst verbleibt. Bei zu kurzer Hauptkette oder zu hoher Seitenkettendichte kann beispielsweise die Zahl der für die Zementkornoberfläche zugänglichen Carboxylgruppen nicht ausreichen. Zu lange Hauptketten mit geringer Seitenkettendichte können hingegen Zementpartikel verbrücken und so eine Flocculation begünstigen. Vermutlich leisten diese nichtadsorbierten Anteile keinen Beitrag zum Wasserreduktionsvermögen des Fließmittels.

Wie bereits erwähnt, handelt es sich bei den polymeren Fließmitteln für zementäre Systeme nach dem derzeitigen Stand der Technik um Copolymere mit kammartiger Struktur, die über freie radikalische Polymerisation hergestellt werden. Alle diese Produkte zeichnen sich durch eine hohe Uneinheitlichkeit bezüglich der Zahl der Seitenketten pro Polymermolekül und bezüglich des Molekulargewichtes aus. Es ist jedoch bekannt, dass es für jede Anwendung und jede Zementsorte ein optimales Molekulargewicht und eine optimale Anzahl von Seitenketten pro Polymermolekül gibt. Alle Bestandteile eines Produktes, die von diesem Optimum abweichen, verringern daher die Wirksamkeit des Produktes bzw. machen höhere Dosierungen notwendig. Weiterhin ist bekannt, dass Polymere mit zu hohem Molekulargewicht koagulierend wirken können.

Entsprechend der deutschen Patentanmeldung 102 37 286.1 wurde gefunden, dass lineare Polyethylenoxid-Polycarbonsäure-Blockcopolymere mit niedrigen Molekulargewichten zwischen 1.000 und 20.000 g/mol überraschenderweise besser verflüssigen als kommerzielle Produkte auf der Basis von kammförmigen Polyethercarboxylaten.

Die Synthese der in Patentanmeldung DE 102 37 286.1 beschriebenen Blockpolymere über Atom Transfer Radical Polymerization (ATRP) ist jedoch relativ aufwendig. Da sich freie (Meth)Acrylsäure nicht kontrolliert direkt mittels ATRP polymerisieren lässt, muss ein Umweg über die entsprechenden tert. -Butylester der (Meth)Acrylsäure gegangen werden. Aufgrund der weitgehenden Wasserunlöslichkeit dieser Ester muss die ATRP entweder in bulk oder organischen Lösemitteln erfolgen. Im Anschluss an die Polymerisation erfolgt dann die sauer katalysierte, selektive Abspaltung der tert.-Butylestergruppen, wobei Isobutylen freigesetzt wird. Weiterhin wirken die ATRP-Katalysatoren relativ stark korrodierend auf Stahlreaktoren. Die ATRP ist somit für eine technische Produktion nicht optimal.

Der vorliegenden Erfindung lag daher die Aufgabe zugrunde, Polymerverbindungen bereitzustellen, die eine ähnlich gute Wirksamkeit wie die oben beschriebenen linearen Blockcopolymere aufweisen, aber wesentlich einfacher synthetisierbar sind.

Diese Aufgabe wurde erfindungsgemäß gelöst durch die Verwendung von statistischen Kammpolymeren, die erhältlich sind durch die radikalische Copolymerisation einer vinylischen Poly(alkylenoxid-)Verbindung (A) der allgemeinen Formel (I), 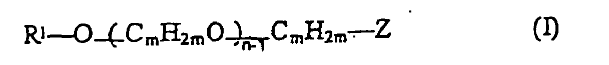 wobei
- R¹ =: Wasserstoff, ein C₁-C₂₀-Alkylrest, ein cycloaliphatischer C₅-C₁₂-Cycloalkylrest, ein substituierter oder nicht substituierter C₆-C₁₄-Arylrest,
- m =: 2 bis 4,
- n =: 1 bis 250,
- Z =: 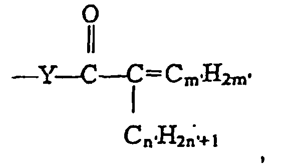
- Y =: O oder NR²,
- R² =: Wasserstoff, C₁₋₁₂-Alkylrest, C₆-C₁₄-Arylrest, 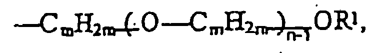
- m' =: 1 bis 4 und
- n' =: 0 bis 2
bedeuten,
mit einer ethylenisch ungesättigten Monomer-Verbindung (B) der allgemeinen Formel (II), 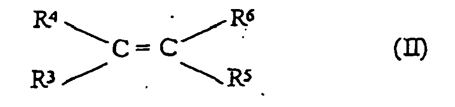 wobei
- R³ =: H, CH₃, COOH oder deren Salze, COOR⁷ oder CONR⁷R⁷,
- R⁴ =: H, ein substituierter oder nicht substituierter C₆-C₁₄-Arylrest,
- R⁵ =: H, CH₃, COOH oder deren Salze, COOR⁷, CONR⁷R⁷, einen substituierten oder nicht substituierten Arylrest oder OR⁸, PO₃H₂, SO₃H, CONH-R⁹,
- R⁶ =: H, CH₃ oder CH₂COOR⁷,
- R⁷ =: H, C₁-C₁₂-Alkyl, C₁-C₁₂-Hydroxyalkyl, C₁-C₁₂-Alkylphosphat oder - phosphonat und deren Salze, C₁-C₁₂- Alkylsulfat oder -sulfonat und deren Salze, 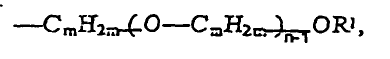
- R⁸ =: Acetyl sowie
- R⁹ =: C₁-C₁₂-Alkylphosphat oder phosphonat und deren Salze, C₁-C₁₂-Alkylsulfat oder sulfonat und deren Salze,
R³ und R⁵ zusammen -O-CO-O-
bedeuten,
nach der "Catalytical Chain Transfer (CCT)"-Methode,
als Dispergiermittel für wässrige Feststoff Suspensionen.

Die erfindungsgemäß verwendeten statistischen Kammpolymere können durch radikalische Copolymerisation einer vinylischen Poly(alkylenoxid-) Verbindung (A) mit mindestens einer ethylenisch ungesättigten Monomer-Verbindung (B) nach der "Catalytical Chain Transfer"- Polymerisationsmethode (CCT) hergestellt werden.

Die CCT-Polymerisation wird in folgenden Patenten und Publikationen näher beschrieben: US 4,526,945 B1, US 4,680,354 B1, EP 196 783 A1, EP 199 436 A1, WO 87/03 605 A1, DE 694 23 653 T2, N: S. Enikolopyan et al., J. Polym. Sci., Polym. Chem. Ed., (1981), 19, 879; D.M. Haddleton et. al., Journal of Polymer Science, Part A: Polymer Chemistry (2001), 39(14), 2378-2384.

Mittels CCT lassen sich Polymere bzw. Oligomere mit deutlich geringeren Molekulargewichten herstellen, als dies über die konventionelle freie radikalische Polymerisation möglich ist.

Während man mittels konventioneller radikalischer Polymerisation selbst bei Verwendung äquimolarer Mengen an Thioregler, bezogen auf die Monomere, kaum in der Lage ist, Molekulargewichte unterhalb 6000 g/mol zu bewerkstelligen, ist mittels CCT die Herstellung von Polymeren mit sehr geringen Molekulargewichten (weniger als 50000 g/mol, insbesondere weniger als 4000 g/mol) ohne Schwierigkeiten möglich. Die erforderliche Menge CCT-Katalysator liegt dabei um mehrere Größenordnungen niedriger als im Falle von konventionellen (Thio)Reglern. Dies führt nicht nur zu einer deutlichen Reduktion der Herstellkosten, sondern hilft auch, die beim Einsatz großer Mengen an Thioregler unvermeidliche Geruchsbelästigung zu vermeiden.

Überraschenderweise zeigen diese mittels CCT hergestellten, statistischen Kammpolymere ein besseres Wasserreduktionsvermögen bei gleicher Dosierung als konventionelle Fließmittel auf der Basis von Kammcopolymeren. Weiterhin zeigte der Beton nach dem Zusatz dieser neuartigen Fließmittel eine deutlich verringerte Klebrigkeit und plastische Viskosität, was besonders die Verarbeitbarkeit von sehr zementreichen Betonen stark verbessert. Für diese besondere Verarbeitungseigenschaft des Betons wurde von der Firma NMB Ltd. der Begriff "rheosmooth" geprägt. Bemerkenswert ist auch die Tatsache, dass Betone, die unter Verwendung der erfindungsgemäßen Fließmittel hergestellt wurden, im Vergleich zu solchen mit konventionellen Polycarboxylatether-Fließmitteln bei gleichem Slump ein deutlich größeres Ausbreitmaß besitzen. Die Betone besitzen also bei gleichem Wasser/Zement-Verhältnis ein stärker scherverdünnendes Verhalten als konventionelle Betone, ohne jedoch zu Segregation ("Bluten") zu neigen.

Durch Variation der Monomerverhältnisse lässt sich darüber hinaus auch der Slump-Loss im Vergleich zu konventionellen Fließmitteln verringern, was ebenfalls nicht vorhersehbar war.

Die erfindungsgemäß verwendeten statistischen Kammpolymere sind erhältlich durch die radikalische Copolymerisation einer vinylischen Poly (alkylenoxid-) Verbindung (A) mit einer ethylenisch ungesättigten Monomer-Verbindung (B) in Gegenwart von CCT-Katalysatoren.

Die erfindungsgemäß eingesetzte vinylische Poly(alkylenoxid-)Verbindung (A) entspricht hierbei der allgemeinen Formel (I) 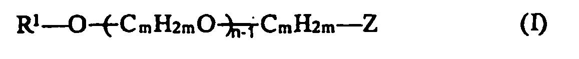 wobei R¹ folgende Bedeutung hat: Ein Wasserstoffatom, ein aliphatischer Kohlenwasserstoffrest mit 1 bis 20 C-Atomen, ein cycloaliphatischer Rest mit 5 bis 12 C-Atomen oder ein Arylrest mit 6 bis 14 C-Atomen, der gegebenenfalls noch substituiert sein kann. Geeignete Substituenten sind z.B. Hydroxyl-, Carboxyl- oder Sulfonsäuregruppen. Für die Indices gilt: m = 2 bis 4 sowie n = 1 bis 250, wobei m bevorzugt die Werte 2 oder 3 und n bevorzugt Werte von 5 bis 250 und noch stärker bevorzugt Werte von 20 bis 135 annehmen kann.

Als bevorzugte Cycloalkylreste sind Cyclopentyl- oder Cyclohexylreste, als bevorzugte Arylreste sind Phenyl- oder Naphthylreste, die insbesondere noch durch Hydroxyl-, Carboxyl- oder Sulfonsäuregruppen substituiert sein können, anzusehen.

Der Baustein Z besitzt im Rahmen der vorliegenden Erfindung folgende Bedeutungen: Z leitet sich ab von vinylisch ungesättigten Verbindungen der allgemeinen Formel

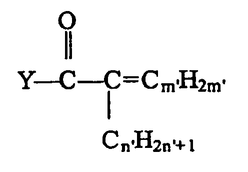

Hierbei kann m' = 1 bis 4 und n' = 0, 1 oder 2 sein, wobei m' = 1 und n' = 0 oder 1 bevorzugt werden. Y kann 0 oder NR² sein und R² kann für H, einen Alkylrest mit 1 bis 12 C-Atomen oder einen Arylrest mit 6 bis 14 C-Atomen sowie für 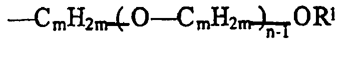 stehen, wobei R¹, m und n vorstehend genannte Bedeutung besitzen. Besonders bevorzugt sind R²= H, CH₃ oder C₂H₅.

Als Comonomere werden (radikalisch) polymerisierbare ethylenisch ungesättigte Monomer-Verbindungen (B) der allgemeinen Formel (II) eingesetzt. Für die Herstellung von Dispergiermitteln sind wasserlösliche ethylenisch ungesättigte Verbindungen besonders geeignet.

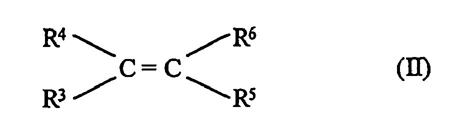

R⁴ kann H oder einen gegebenenfalls substituierten C₆-C₁₄-Arylrest bedeuten. Geeignete Substituenten sind z.B. Hydroxyl-, Carboxyl- oder Sulfonsäuregruppen. R³ und R⁵ können dabei H, CH₃, COOH oder deren Salze, COOR⁷, CONR⁷R⁷ sowie 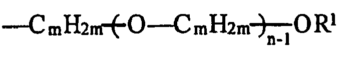 bedeuten, wobei als Carbonsäure-Salze vorzugsweise Alkali-(Natrium, Kalium), Erdalkali-(Calcium) oder Ammonium-Salze eingesetzt werden, wobei R¹, m und n vorstehend bezeichnete Bedeutung besitzen.

R⁷ kann für H, C₁-C₁₂-Alkyl, C₁-C₁₂-Hydroxyalkyl, C₁-C₁₂-Alkylphosphat oder -phosphonat und deren Salze (Alkali-, Erdalkali- oder Ammoniumsalze) sowie C₁-C₁₂-Alkylsulfat oder -sulfonat und deren Salze (Alkali-, Erdalkali- oder Ammoniumsalze) stehen.

R³ und R⁵ können in Formel (I) zusammen -O-CO-O- bedeuten, so dass sich die entsprechenden Monomere vom Maleinsäureanhydrid ableiten. R⁵ kann außerdem für einen ggf. substituierten C₆-C₁₄-Arylrest oder OR⁸ stehen, wobei R⁸ = Acetyl bedeutet. Geeignete Substituenten sind z.B. Hydroxyl-, Carboxyl- oder Sulfonsäuregruppen.

Schließlich kann R⁵ auch PO₃H₂, SO₃H oder CONH-R⁹ oder deren jeweilige Alkali-, Erdalkali- oder Ammoniumsalze bedeuten. R⁹ stellt hierbei C₁-C₁₂-Alkylphosphat oder -phosphonat und deren Salze, C₁-C₁₂-Alkylsulfat oder -sulfonat und deren Salze dar, wobei als Salze jeweils die Alkali-, Erdalkali- und Ammoniumsalze in Frage kommen. R⁶ steht für H, CH₃ oder CH₂-COOR⁷, wobei R⁷ oben genannte Bedeutung besitzt.

Zur Herstellung der erfindungsgemäß verwendeten Copolymere werden vorzugsweise Monomer-Verbindungen eingesetzt, bei denen R³ und R⁴ = H oder R³ und R⁵ zusammen O-CO-O, R⁶ = H, CH₃ oder CH₂-COOR⁷ und R⁵ = COOR⁷, PO₃H₂, SO₃H oder CONH-R⁹- SO₃H sowie ggf. mit Hydroxyl-, Carboxyl- oder Sulfonsäuregruppen substituierte Phenylreste darstellen. Bevorzugt bedeuten R³ und R⁴ = H, R⁶ = H, CH₃ und R⁵ = COOR⁷, PO₃H₂ oder CONH-R⁹- SO₃H und ganz besonders bevorzugt R³ und R⁴ = H, R⁶ = CH₃, R⁵ = COOH bzw. deren Salze oder COOR⁷ sowie R⁷ = C₁-C₆-Hydroxyalkyl.

Die verwendeten Kammpolymere können molare Verhältnisse von vinylischer Poly(alkylenoxid-)Verbindung (A) zu ethylenisch ungesättigter Monomer-Verbindung (B) von 1 : 0,01 bis 1 : 100 aufweisen. Bevorzugt sind aber Verhältnisse von 1:0,1 bis 1:50 und besonders bevorzugt Verhältnisse von 1 : 1 bis 1 : 35.

Die Herstellung der Kammpolymere kann durch radikalische Polymerisation in Gegenwart von CCT-Katalysatoren und geeigneten Initiatoren bei Temperaturen von 30 bis 150 °C erfolgen.

Die Polymerisation kann in Gegenwart von CCT-Katalysatoren durchgeführt werden, wie sie z.B. in EP 739 359 B1 beschrieben sind. Vorzugsweise besitzen diese Katalysatoren folgende allgemeine Formel (III), 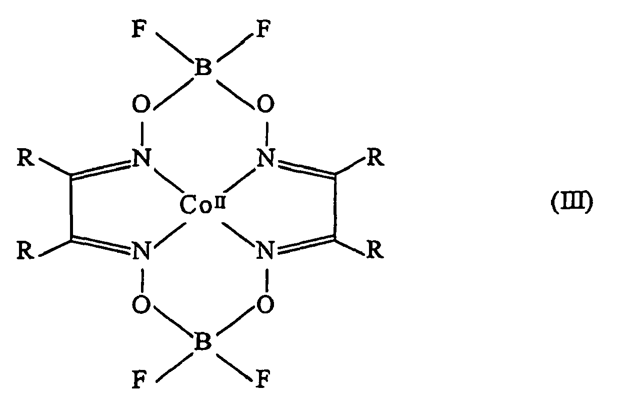 wobei R insbesondere eine Methylgruppe bedeutet.

Zur Polymerisation unter CCT-Bedingungen werden zunächst die Monomere und Lösemittel, vorzugsweise Wasser, nach Methoden die dem Fachmann auf dem Gebiete der Polymerisation bzw. der organischen Synthese bekannt sind, sauerstofffrei gemacht. Dies kann zum Beispiel durch Durchleiten von Stickstoff, Argon oder anderen nicht-oxidierenden Gasen erreicht werden. Die Monomerlösung wird dann mit einem Initiator (insbesondere Azoinitiator oder Redoxsystem) sowie dem CCT-Katalysator versetzt und erwärmt. Geeignete Azoinitiatoren sollten in der Reaktionsmischung löslich sein und eine der Reaktionstemperatur angemessene Halbwerstzeit besitzen.

Besonders geeignet für Polymerisationen im wässrigen Milieu sind, ohne Anspruch auf Vollständigkeit zu erheben, folgende Azoinitiatoren: 2,2'-Azobis(2-methylpropionamidin)dihydrochlorid (CAS 2997-92-4), 2,2'-Azobis[2-(2-imidazolin-2yl)propan]dihydrochlorid (CAS 27776-21-2) oder 4,4'-Azobis[4-cyanopentansäure] (CAS 2638-94-0). Die Polymerisationstemperatur hängt von der thermischen Halbwertszeit des verwendeten Azoinitiators ab. Üblicherweise liegen die Reaktionstemperaturen zwischen 30 und 150 °C, bevorzugt zwischen 40 und 100 °C und noch stärker bevorzugt zwischen 50 und 80°C.

Abweichend von der oben beschriebenen Methode ist es auch möglich, eine oder mehrere Monomerkomponenten während der Reaktion zuzudosieren. Des Weiteren kann auch der CCT-Katalysator teilweise vorgelegt und teilweise im Verlaufe der Polymerisation zudosiert werden. Es ist auch möglich, die Gesamtmenge des Katalysators im Verlaufe der Polymerisation zuzudosieren, jedoch führt dies meist zu uneinheitlicheren Produkten.

Obwohl eine weitgehende Sauerstofffreiheit entscheidend für den Erfolg von CCT-Polymerisationen, d. h. für die Herstellung von Polymeren mit niedrigen Molekulargewichten und monomodalen Molekulargewichtsverteilungen ist, wurde gefunden, dass es überraschenderweise trotzdem möglich ist, CCT-Polymerisationen durch Redox-Systeme zu initiieren. Hierfür ist es entscheidend, dass die reduzierende Komponente vorgelegt, und die oxidierende Komponente langsam im Verlauf der Polymerisation zudosiert wird. Unter anderem können Wasserstoffperoxid, tert.-Butylhydroperoxid, Benzoylperoxid, Lauroylperoxid und Persulfate als Oxidationskomponente verwendet werden. Geeignete Reduktionspartner sind Metallsalze die sich in eine höhere Oxidationsstufe überführen lassen, wie beispielsweise Eisen-IIsulfat, Ascorbinsäure und Hydroxymethansulfinate bzw. deren Derivate und Salze.

Ein weiterer Gegenstand der vorliegenden Erfindung ist die Verwendung der Kammpolymere als Dispergiermittel für wässrige Feststoff-Suspensionen, wobei die entsprechenden Kammpolymere in einer Menge von 0,01 bis 5 Gew.-%, bezogen auf die jeweilige Feststoff-Suspension, eingesetzt werden.

Es ist im Rahmen der vorliegenden Erfindung möglich, dass die entsprechende Feststoff-Suspension anorganische Partikel enthält, die ausgewählt sind aus der Gruppe Gesteinsmehl, Silikatmehl, Kreide, Tone, Porzellanschlicker, Talkum, Pigmente und Ruß.

Besonders bevorzugt werden die Kammpolymere für hydraulische Bindemittelsuspensionen auf der Basis von Zement, Kalk, Gips und Anhydrit verwendet. Die eingesetzten Kammpolymere weisen hierbei ein besseres Wasserreduktionsvermögen bei gleicher Dosierung auf im Vergleich zu konventionellen Fließmitteln auf der Basis von Kammpolymeren entsprechend dem Stand der Technik.

Außerdem besitzen die entsprechenden Baustoffmischungen nach dem Zusatz dieser Kammpolymere eine deutlich verringerte Klebrigkeit und plastische Viskosität, was besonders die Verarbeitbarkeit von sehr zementreichen Baustoffmischungen, wie z. B. Betonen, stark verbessert. Außerdem besitzen die Baustoffmischungen unter Verwendung der erfindungsgemäß vorgeschlagenen Fließmittel im Vergleich zu solchen mit konventionellen Polycarboxylatether-Fließmittel bei gleichem Slump ein deutlich höheres Ausbreitmaß. Die Baustoffmischungen und insbesondere Betone besitzen also bei gleichem Wasser/Zement-Verhältnis ein stärker scherverdünnendes Verhalten als konventionelle Betone, ohne jedoch zu Segregation ("Bluten") zu neigen.

Es werden statistische Kammpolymere beschrieben, die erhältlich sind durch die radikalische Copolymerisation einer vinylischen Poly (alkylenoxid-)Verbindung (A) mit einer ethylenisch ungesättigten Monomer-Verbindung (B) nach der "Catalytical Chain Transfer (CCT)"-Methode. Diese Kammpolymere eignen sich hervorragend für hydraulische Bindemittelsuspension auf der Basis von Zement, Kalk, Gips und Anhydrit, da sie im Vergleich zu konventionellen Fließmitteln auf der Basis von Kammpolymeren entsprechend dem Stand der Technik ein besseres Wasserreduktionsvermögen bei gleicher Dosierung aufweisen. Außerdem besitzen die entsprechenden Baustoffmischungen nach dem Zusatz dieser Kammpolymere eine deutlich verringerte Klebrigkeit und plastische Viskosität, was besonders die Verarbeitbarkeit von sehr zementreichen Baustoffmischungen, wie z. B. Betonen, stark verbessert. Des Weiteren zeigen die Baustoffmischungen unter Verwendung der erfindungsgemäß vorgeschlagenen Fließmittel im Vergleich zu solchen mit konventionellen Polycarboxylatether-Fließmitteln bei gleichem Slump ein deutlich höheres Ausbreitmaß. Die Baustoffmischungen und insbesondere Betone weisen also bei gleichem Wasser/Zement-Verhältnis ein stärker scherverdünnendes Verhalten als konventionelle Betone auf, ohne jedoch zur Segregation ("Bluten") zu neigen.

Die nachfolgenden Beispiele und die beigefügte Abbildung sollen die Erfindung näher veranschaulichen.

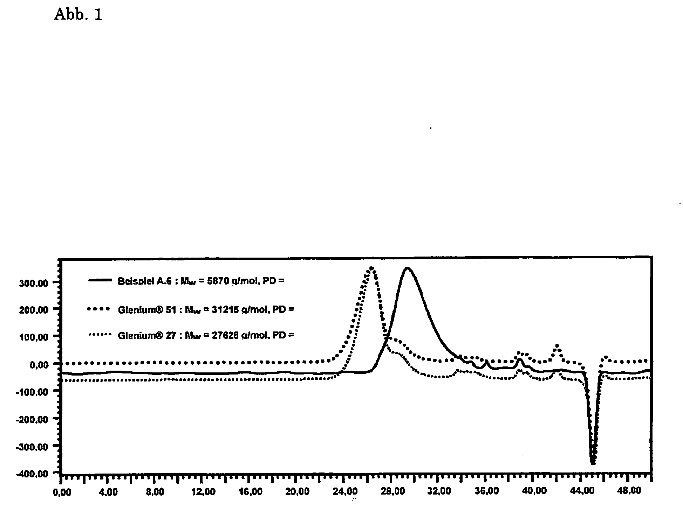

Abb. 1 GPC-Chromatogramm zu Beispiel A.6. RI-Detektion
Mobile Phase: Gemisch aus 80% 0,05M wässrige Ammoniumformiatlösung und 20°/ Acetonitril Säulenkombination
(von Showa Denko): Shodex OHpak SB-804 HQ (8mm x 300mm) und Shodex OHpak 802,5 HQ (8mm x 300mm) sowie eine Shodex OHpak SB-G (6mm x 50mm) als Vorsäule.
Säulenfüllung: Polyhydroxymethylmethacrylat.

### Beispiele

### A. Allgemeine Vorschriften zur Synthese der erfindungsgemäßen Fließmittel mittels CCT

### Variante 1

Ein 500 ml Dreihalskolben wird mit KPG-Rührer, einer Einleitung für Inertgas (Stickstoff), Gaswaschflasche zur Inertgasableitung, einer Dosierpumpe zur Zudosierung von Monomerlösungen und einem Heizbad versehen. Weiterhin wird ein Vorlagebehälter für die Monomerlösung benötigt, der ebenfalls mittels Inertgas sauerstofffrei gemacht werden muss.

20 ml Wasser und der Azoinitiator werden im Kolben vorgelegt. Die Lösung wird anschließend durch Durchleiten des Inertgases sauerstofffrei gemacht.

Die Monomere werden als Gemisch in den Vorlagebehälter gefüllt und gegebenenfalls mit Wasser soweit verdünnt, dass eine pumpbare Lösung erhalten wird. Die Monomerlösung im Vorlagenbehälter wird ebenfalls durch Durchleiten von Inertgas sauerstofffrei gemacht.

Nun wird der Kobalt-Komplex in das Reaktionsgefäß gegeben, nochmals für 10 min Inertgas durchgeleitet und schließlich auf eine Temperatur erhitzt, bei der der verwendete Azoinitiator eine angemessene Halbwertszeit besitzt (ca. 45 bis 90 min). Das Monomergemisch wird aus dem Vorlagebehälter über die gesamte Reaktionszeit zugefahren. Im Falle der unten aufgeführten Beispiele wurde das Monomer linear zudosiert.

Die Reaktion ist beendet, wenn mittels GPC oder GC keine nennenswerten Mengen an Monomer mehr nachweisbar sind. Dies ist im allgemeinen nach 4 bis 8 Stunden der Fall. Variante 1 kann vorteilhaft verwendet werden, wenn alle eingesetzten Monomere ähnliche Polymerisationsgeschwindigkeiten aufweisen. Dies ist etwa bei Verwendung kurzkettiger Polyethylenglykolmonomethylether-Methacrylate (MPEG-MA) zur Synthese der erfindungsgemäßen Copolymere der Fall.

### Variante 2

Ein 500 ml Dreihalskolben wird mit KPG-Rührer, einer Einleitung für Inertgas (Stickstoff), Gaswaschflasche zur Inertgasableitung, einer Dosierpumpe zur Zudosierung von Monomerlösungen und einem Heizbad versehen. Weiterhin wird ein Vorlagebehälter für die Monomerlösung benötigt, der ebenfalls mittels Inertgas sauerstofffrei gemacht werden muss.

Das Makromonomer (MPEG-MA) und der Azoinitiator werden im Kolben vorgelegt und mit Wasser soweit verdünnt, dass eine gut rührbare Lösung entsteht. Der Wassergehalt liegt dabei meist bei 50 Gew.-%. Die Lösung wird anschließend durch Durchleiten des Inertgases sauerstofffrei gemacht.

Nun wird der Kobalt-Komplex zugegeben, nochmals für 10 min Inertgas durchgeleitet. Für Reaktionstemperaturen und -zeiten gelten ansonsten die Werte wie in Variante 1. Das Comonomer aus dem Vorlagebehälter wird über die gesamte Reaktionszeit zugefahren. Im Falle der unten aufgeführten Beispiele wurde das Monomer linear zudosiert.

Beispiele für die Synthese erfindungsgemäßer Copolymere sind in Tabelle 1 zusammengefasst. Dabei steht MAS für Methacrylsäure, IT für Itaconsäure, HEMA für Hydroxyethylmethacrylat, EGMAP für Ethylenglykolmonomethacrylat-phosphat und V 44^{[™]} für 2,2'-Azobis[2-(2-imidazolin-2yl)propan]dihydrochlorid. In der 4. Spalte findet sich oben jeweils das mittlere Molekulargewicht des MPEG-Substituenten des verwendeten MPEG-MA.

**Tabelle 1**

| **Beispiel Nr.** | **Variante** | **MAS [mol]** | **IT [mol]** | **HEMA [mol]** | **EGMAP [mol]** | **MPEG-MA [mol]** | **V44^{[™]} [mg]** | **Co-Kat [mg]** | **Temp. [°C]** | **Reaktions dauer [h]** | **M_{w}[g/mol] PD** |
|---|---|---|---|---|---|---|---|---|---|---|---|
| A.1 | 1 | 0.27 | x | x | x | 350 | 600 | 21 | 60 | 6 | 5790 |
| | | | | | | 0,17 | | | | | 1,5 |
| A.2 | 1 | 0.65 | x | x | x | 350 | 1200 | 45 | 60 | 6 | 6100 |
| | | | | | | 0,22 | | | | | 1,52 |
| A.3 | 1 | 0,27 | x | x | x | 475 | 600 | 22 | 60 | 5 | 6200 |
| | | | | | | 0,17 | | | | | 1,49 |
| A.4 | 1 | 0,65 | x | x | x | 475 | 1200 | 44 | 60 | 6 | 5870 |
| | | | | | | 0,22 | | | | | 1,43 |
| A.5 | 1 | 0,65 | x | x | x | 475 | 1200 | 43 | 60 | 8 | 6230 |
| | | | | | | 0,07 | | | | | 1,47 |
| A.6 | 1 | 0,84 | x | x | x | 475 | 1200 | 64 | 60 | 8 | 6090 |
| | | | | | | 0,028 | | | | | 1,56 |
| A.7 | 1 | 0,76 | x | 0,08 | x | 475 | 1200 | 43 | 60 | 3 | 6100 |
| | | | | | | 0,054 | | | | | 1,49 |
| A.8 | 2 | 0.55 | x | x | x | 750 | 300 | 22 | 60 | 5 | 7950 |
| | | | | | | 0,11 | | | | | 1,55 |
| A.9 | 2 | 0.8 | x | x | x | 750 | 600 | 45 | 60 | 4 | 7190 |
| | | | | | | 0,08 | | | | | 1,54 |
| A.10 | 2 | 0,84 | x | x | x | 750 | 1200 | 64 | 60 | 6 | 6240 |
| | | | | | | 0,028 | | | | | 1,57 |
| A.11 | 2 | 0,27 | 0,11 | x | x | 750 | 600 | 22 | 60 | 6 | 7000 |
| | | | | | | 0,054 | | | | | 1,51 |
| A.12 | 2 | 0,54 | x | 0,27 | x | 750 | 600 | 25 | 60 | 6 | 9100 |
| | | | | | | 0,054 | | | | | 1,62 |
| A.13 | 2 | 0,64 | x | 0,21 | x | 750 | 600 | 25 | 60 | 6 | 9000 |
| | | | | | | 0,043 | | | | | 1,58 |
| A.14 | 2 | 0,087 | x | x | 0,067 | 750 | 300 | 53 | 60 | 6 | 10230 |
| | | | | | | 0,084 | | | | | 1,78 |
| A.15 | 2 | 0,4 | x | x | x | 1100 | 600 | 25 | 60 | 5 | 7300 |
| | | | | | | 0,07 | | | | | 1,63 |
| A.16 | 2 | 0,5 | x | x | x | 1100 | 600 | 21 | 60 | 6 | 7730 |
| | | | | | | 0,05 | | | | | 1,51 |
| A.17 | 2 | 0,16 | x | x | x | 1100 | 300 | 11 | 60 | 6 | 12120 |
| | | | | | | 0,05 | | | | | 1,64 |
| A.18 | 2 | 0,8 | x | x | x | 2000 | 600 | 22 | 60 | 5 | 9330 |
| | | | | | | | | | | | |
| A.19 | 2 | 0,4 | x | x | x | 4500 | 500 | 22 | 60 | 7 | 12300 |
| | | | | | | 0,013 | | | | | 1,61 |
| A.20 | 2 | 0,4 | x | x | x | 4500 | 600 | 25 | 60 | 7 | 10800 |
| | | | | | | 0,008 | | | | | 1,6 |

Abbildung 1 zeigt das GPC-Chromatogramm von Beispiel A.6. Die Chromatogramme der übrigen erfindungsgemäß verwendeten Polymere sind diesem Beispiel sehr ähnlich. Die Polydispersitäten liegen meist unterhalb von 1,6 und sind damit deutlich geringer als die Polydispersitäten, die mittels der konventionellen radikalischen Polymerisationstechniken erzielt werden können.

### B. Mörteltests zur Bestimmung des Wasserreduktionsvermögens und Erhaltung der Fließfähigkeit über einen Zeitraum von 90 min

Die Durchführung der Tests erfolgte gemäß (DIN EN 1015-3).

**Tabelle 2: Ergebnisse der Mörtelausbreitversuche mit CEM I 42,5 R v.02.03 Karlstadt**

| **Rilem Mischer; Zement: Karlstadt; SIZ = 2,2** | | | | **Ausbreitmaß Mörtel:** | | | | |
|---|---|---|---|---|---|---|---|---|
| **Normsand = 70%; Quarzsand = 30%** | | | | **0min** | **30min** | **60min** | **90min** | **Δ** |
| **Beispiel** | **Fließmittel** | **W/Z** | **Dos. [%]** | **[cm]** | **[cm]** | **[cm]** | **[cm]** | **[cm]** |
| B.1 | A.1 | 0,46 | 0,2 | 21,6 | 21,5 | 21,5 | 21 | 0,6 |
| B.2 | A.2 | 0,46 | 0,2 | 24,5 | 22,7 | 22,8 | 22,3 | 2,2 |
| B.3 | A.3 | 0,47 | 0,2 | 23 | 22 | 21,4 | 21,3 | 1,7 |
| B.4 | A.4 | 0,4 | 0,25 | 25,2 | 24 | 23 | 22,6 | 2,6 |
| B.5 | A.5 | 0,4 | 0,2 | 25,5 | 21,9 | 21,2 | 20,6 | 4,9 |
| B.6 | A.6 | 0,4 | 0,2 | 23,4 | 21,2 | 20,3 | 20,3 | 3,1 |
| B.7 | A.7 | 0,46 | 0,2 | 25,5 | 23,1 | 22,5 | 21,8 | 3,7 |
| B.8 | A.8 | 0,37 | 0,2 | 24,6 | 20,7 | 20,1 | 19,6 | 5,0 |
| B.9 | A.9 | 0,38 | 0,2 | 24,2 | 22,3 | 21,2 | 20,5 | 3,7 |
| B.10 | A.10 | 0,44 | 0,2 | 24,4 | 21,5 | 20,4 | 20 | 4,4 |
| B.11 | A.11 | 0,31 | 0,2 | 22,7 | 19,4 | 19,4 | 18,9 | 3,8 |
| B.12 | A.12 | 0,42 | 0,2 | 22,7 | 20,9 | 20,9 | 20,7 | 2,0 |
| B.13 | A.13 | 0,44 | 0,2 | 23,8 | 22,5 | 22,4 | 22,5 | 1,3 |
| B.14 | A.14 | 0,44 | 0,2 | 24 | 21,8 | 21,8 | 21,4 | 2,6 |
| B.15 | A.15 | 0,44 | 0,2 | 24,7 | 21,6 | 21,7 | 21,4 | 3,3 |
| B.16 | A.16 | 0,42 | 0,2 | 25,6 | 22,7 | 22,2 | 21,3 | 4,3 |
| B.17 | A.17 | 0,47 | 0,2 | 22,5 | 21,7 | 21,3 | 21,6 | 0,9 |
| B.18 | A.18 | 0,41 | 0,2 | 24 | 20,3 | 20,8 | 18,5 | 5,5 |
| B.19 | A.19 | 0,4 | 0,2 | 23 | 19,3 | 18 | 16,8 | 6,2 |
| 8.20 | A.20 | 0,38 | 0,2 | 23,1 | 18,2 | 17,6 | 16,5 | 6,6 |
| B.21 | ohne Additiv | 0,48 | 0 | 20,6 | - | - | - | - |
| B.22 | Glenium^{®} 27 | 0,48 | 0,2 | 23,1 | 23 | 23 | 22,9 | 0,2 |
| B.23 | Glenium^{®} 51 | 0,4 | 0,2 | 24,7 | 22,8 | 22,1 | 21,8 | 2,90 |

### Tabelle 2

Als Referenzsubstanzen dienten die kommerziellen Produkte Glenium^{®} 51 und Glenium^{®} 27. Während bei Glenium^{®} 51 (Beispiel B.23) im Hinblick auf eine maximale Wasserreduktion optimiert wurde, steht bei Glenium^{®} 27 (Beispiel B.22) der Erhalt der Verarbeitbarkeit über einen Zeitraum von 90 min im Vordergrund. Beispiel B.21 spiegelt das Verhalten eines Mörtels ohne Zusatz von Fließmitteln wider. Bei einem W/Z-Verhältnis von 0,48 wird ein anfängliches Ausbreitmaß von ca. 20 cm erreicht. Allerdings steift der Mörtel so schnell an, dass schon nach 10 min kein Ausbreitmaß mehr bestimmt werden kann. Durch Zusatz von Glenium^{®} 27 zu einem Mörtel mit einem gleichen W/Z von 0,48 nimmt das Ausbreitmaß zwar nur mäßig auf ca. 23 cm zu, jedoch wird die Konsistenz über einen Zeitraum von 90 min fast unverändert aufrecht erhalten.

Aus Tabelle 2 wird deutlich, dass sämtliche getesteten erfindungsgemäß verwendeten Fließmittel eine starke Verflüssigungswirkung besitzen. Sie liegt durchweg über der Wirkung von Glenium^{®} 27. Wie man anhand der Beispiele B.1, B.13 und B.17 erkennen kann, ist es durch Wahl einer geeigneten Monomerzusammensetzung sogar möglich, bei geringerem W/Z-Wert eine dem Glenium^{®} 27 vergleichbare Konsistenzerhaltung des Mörtels zu erzielen.

Den Beispielen B.4, B.5, B.6, B.8, B.9, B.11 und B.20 kann entnommen werden, dass durch den Einsatz der beschriebenen Polymere auch das Wasserreduktionsvermögen von Glenium^{®} 51 übertroffen werden kann.

Bemerkenswert ist weiterhin, dass selbst bei sehr hohen Ausbreitmaßen von > 26 cm (nicht in Tabelle 2 aufgeführt) noch keine Segregation ("Bluten") auftritt, wie dies bei konventionellen Fließmitteln ohne Zusatz spezieller Stabilisatoren der Fall wäre.

### C. Betontests zur Bestimmung des Wasserreduktionsvermögens und Erhaltung der Fließfähigkeit über einen Zeitraum von 90 min

Die Durchführung der Tests erfolgte gemäß DIN EN 206-1, DIN EN 12350-2 und DIN EN 12350-5.

Zement: CEM I 42,5 R v.02.03 Karlstadt (285 kg), Dosierung: 0,02 % bez. auf Feststoff, Temperatur: 20 °C. Die Ergebnisse sind in Tabelle 3 zusammengefasst.

Bei dieser Testserie wurde das Wasser-Zementverhältnis so gewählt, dass für alle Proben nach Beendigung des Mischvorgangs ein einheitlicher Slump-Wert von ca. 20 cm erreicht wurde. Auch hier dienten wieder Glenium^{®} 51 und Glenium^{®} 27 als Referenzsubstanzen.

Wie schon im Mörtel, so zeigen die erfindungsgemäß verwendeten Polymere auch im Beton eine deutliche Verflüssigungswirkung. Betrachtet man zunächst nur den Slump-Wert, so fällt auf, dass dieser über einen Zeitraum von 90 min meist deutlicher abfällt, als dies bei den Referenzsubstanzen Glenium^{®} 51 und 27 der Fall ist. Der Slump-Wert ist ein Maß dafür, wie stark der Betonkuchen nach dem abheben des Metallkonus kollabiert (Höhendifferenz zwischen der Oberkante des Metallkonus und der Höhe des Betonkuchens nach dem Abziehen der Metallform). Der Slump-Flow entspricht dem Basisdurchmesser des Betonkonus nach dem Zusammensacken.

**Tabelle 3: Gl. 51 = Glenium^{®} 51, Gl. 27 = Genium^{®} 27**

| **Beispiel** | **Fließmittel** | **w/z w/z** | **Slump In (cm)** | | | | | **Slump - Flow In (cm)** | | | | | **Ausbreitmaß In cm** | | | | |
|---|---|---|---|---|---|---|---|---|---|---|---|---|---|---|---|---|---|
| | | | 0 | 10 | 40 | 60 | 90 | 0 | 10 | 40 | 60 | 90 | 0 | 10 | 40 | 60 | 90 |
| C.1 | A1 | 0,6 | 18.5 | 17 | 13 | 14 | 9 | 34 | 28 | 25 | 25 | 21 | 55 | 55 | 52 | 52 | 49 |
| C.2 | A2 | 0.6 | 20,5 | 20.5 | 19 | 15.5 | 15 | 36 | 36 | 32 | 28 | 27 | 61 | 61 | 57 | 55 | 53 |
| C.3 | A4 | 0,6 | 19.5 | 20.5 | 19,5 | 20,5 | 18 | 39 | 39 | 37 | 34 | 33 | 63 | 65 | 62 | 59 | 55 |
| C.4 | A5 | 0,59 | 19 | 19 | 16,5 | 15 | 14 | 34 | 34 | 29 | 27 | 25 | 59 | 58 | 55 | 53 | 51 |
| C.5 | A7 | 0,60 | 21 | 22 | 19,5 | 19 | 17 | 36 | 38 | 31 | 30 | 28 | 62 | 62 | 59 | 57 | 55 |
| C.6 | A8 | 0,60 | 19,5 | 19 | 17 | 7 | | 31 | 30 | 26 | 20 | | 62 | 60 | 55 | 54 | |
| C.7 | A8 | 0,60 | 20,5 | 20 | 19 | 19 | 17 | 36 | 37 | 31 | 33 | 31 | 61 | 61 | 59 | 56 | 54 |
| C.8 | A9 | 0,55 | 20,5 | 19,5 | 16,5 | 5,5 | | 38 | 34 | 28 | 20 | | 61 | 59 | 53 | 50 | |
| C.9 | A.9 | 0.6 | 20,5 | 20 | 19 | 18 | | 32 | 31 | 27 | 27 | | 61 | 60 | 58 | 57 | |
| C.10 | A.10 | 0,58 | 20,5 | 19 | 14 | 12,5 | 6,5 | 33 | 31 | 27 | 26 | 20 | 58 | 58 | 54 | 52 | 50 |
| C.11 | A11 | 0,55 | 20,5 | 18,5 | 6 | | | 35 | 31 | 20 | | | 59 | 56 | 49 | | |
| C.12 | A.12 | 0,58 | 20 | 18 | 17 | 6 | | 30 | 28 | 28 | 20 | | 60 | 57 | 55 | 50 | |
| C.13 | A.13 | 0,58 | 20,5 | 21 | 16,5 | 13 | | 35 | 35 | 29 | 25 | | 61 | 59 | 57 | 54 | |
| C.14 | A.14 | 0,59 | 18,5 | 18,5 | 17 | 16 | | 28 | 28 | 25 | 24 | | 58 | 57 | 56 | 53 | |
| C.15 | A.15 | 0,57 | 20,5 | 18 | 17 | 15,5 | 7,5 | 41 | 37 | 30 | 27 | 20 | 61 | 60 | 53 | 51 | 49 |
| C.16 | A.15 | 0,59 | 20,5 | 19,5 | 17,5 | 15 | 14,5 | 41 | 38 | 34 | 26 | 26 | 64 | 61 | 55 | 54 | 50 |
| C.17 | A.16 | 0,59 | 20,5 | 20,5 | 18 | 19 | 17 | 39 | 36 | 32 | 30 | 28 | 64 | 62 | 57 | 55 | 52 |
| C.18 | A.16 | 0,62 | 21 | 21 | 19 | 18 | 16,5 | 38 | 38 | 35 | 33 | 31 | 62 | 62 | 59 | 58 | 55 |
| C.19 | A.17 | 0,59 | 19,5 | 19,5 | 18 | 16 | 14 | 33 | 33 | 29 | 25 | 27 | 58 | 57 | 54 | 52 | 50 |
| C.20 | A.18 | 0,59 | 21,5 | 20,5 | 20.5 | 18,5 | 15 | 44 | 39 | 33 | 32 | 26 | 64 | 63 | 58 | 55 | 51 |
| C.21 | A.19 | 0,59 | 19,5 | 20 | 15.5 | 14 | 7 | 37 | 36 | 27 | 24 | 21 | 57 | 57 | 52 | 50 | 47 |
| C.22 | A.20 | 0,56 | 20 | 18 | 15,5 | 13,5 | 12 | 35 | 30 | 27 | 26 | 25 | 59 | 57 | 52 | 50 | 49 |
| C.23 | Gl. 51 | 0,55 | 20 | 20 | 18,5 | 16,5 | 16,5 | 39 | 37 | 32 | 28 | 28 | 59 | 58 | 55 | 53 | 49 |
| C.24 | Gl. 27 | 0,62 | 19,5 | 20,5 | 21 | 19,5 | 20,0 | 30 | 34 | 33 | 32 | 32 | 57 | 59 | 58 | 57 | 55 |

Das Ausbreitmaß erhält man, indem der Ausbreit-Tisch, gemäß der oben genannten DIN-Verfahren, durch 10-maliges Anheben und Aufstoßen erschüttert wird. Die durch das "Klopfen" auftretenden Scherkräfte bewirken ein weiteres Ausbreiten des Betons. Der Durchmesser des Betonkuchens nach dem "Klopfen" wird als Ausbreitmaß bezeichnet. Vergleicht man nun Slump und Ausbreitmaße jeweils für die Referenzsubstanzen Glenium^{®} 51 und 27 einerseits und für die erfindungsgemäß verwendeten Polymere andererseits, so fällt auf, dass letztere bei vergleichbarem Slump, unmittelbar nach Mischvorgang (0 min) ein größeres Ausbreitmaß besitzen (Beispiele C.2, C.3, C.5, C.6, C.7, C.8, C.9, C.12, C.13, C.15, C.16, C.17, C.18, C.20). Noch drastischer werden die Unterschiede, wenn man die Slump-Werte mit den korrespondierenden Ausbreitmaßen nach 60 und 90 min vergleicht. Glenium^{®} 51 erreicht nach 90 min einen Slump von 16,5 cm und ein Ausbreitmaß von 49 cm. Betrachtet man zum Vergleich die Beispiele C.1, C.6, C.8, C.10, C.11, C.12, C.15 und C.22 so wird deutlich, dass selbst bei sehr niedrigen Slumpwerten von weniger als 10 cm - der Beton ist also so steif, dass der Konus kaum noch unter dem Eigengewicht kollabiert - Ausbreitmaße von über 49 cm erreicht werden.

Bei Zugabe konventioneller Fließmittel würde ein Bentonkonus, mit einem derart geringen Slump, auf dem Ausbreit-Tisch nach dem Klopfen zu einem unregelmäßigen unzusammenhängenden Haufen zerfallen. Ein Ausbreitmaß kann unter diesen Umständen dann nicht mehr angegeben werden. Dieses Fließen unter Einwirkung von Scherkräften wird als plastische Viskosität oder Scherverdünnung bezeichnet.

Die erfindungsgemäß verwendeten Polymere bewirken also ein deutlich stärker scherverdünnendes Verhalten des Betons als konventionelle Fließmittel. Dieses Verhalten verbessert beispielsweise die Pumpbarkeit von Betonen. Durch die Scherverdünnung sinkt nicht nur der Energieaufwand, sondern es wird auch das Absetzen von Zuschlägen, was zu einem Verstopfen der Pumpe führen kann, unterdrückt. Darüber hinaus sinkt durch eine niedrige plastische Viskosität der Kraftaufwand, der nötig ist, um das Pumprohr durch den Beton zu ziehen. Hinzu kommt noch eine geringere Klebrigkeit des Betons, welche sich besonders bei zementreichen Betonen sehr positiv auf die Verarbeitbarkeit auswirkt. Für diese besondere Verarbeitungseigenschaft wurde, wie eingangs bereits erwähnt, der Begriff "rheosmooth" eingeführt. Sie ist besonders dann von großer Bedeutung, wenn besonders zementreiche Betone zur Anwendung kommen, wie dies beispielsweise in Japan der Fall ist. Bislang ist es sehr schwierig diesen Effekt durch den Einsatz konventioneller Fließmittel zu generieren.

Neben scherverdünnenden Eigenschaften sind die erfindungsgemäß verwendeten Polymere bei geeigneter Monomerzusammensetzung auch in der Lage, den Wasserbedarf des Betons drastisch zu reduzieren. Wie die Beispiele C.8 und C.11 zeigen, konnte das Wasserreduktionsvermögen von Glenium^{®} 51 erreicht bzw. sogar leicht übertroffen werden. Die Verarbeitbarkeit der Betone fällt bei Verwendung der erfindungsgemäßen Polymere zwar tendenziell über einen Zeitraum von 90 min etwas stärker ab als bei Glenium^{®} 27, jedoch wird in vielen Fällen trotz geringerem W/Z Wert nach 90 min immer noch das Ausbreitmaß von Glenium^{®} 27 erreicht, wie man anhand der Beispiele C.3, C.5 und C.18 sieht.

## Patentansprüche

1. Verwendung von statistischen Kammpolymeren, die erhältlich sind durch die radikalische Copolymerisation einer vinylischen Poly(alkylenoxid-) Verbindung (A) der allgemeinen Formel (I), 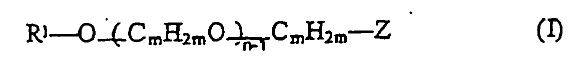 wobei
R¹ = Wasserstoff, ein C₁-C₂₀-Alkylrest, ein cycloaliphatischer C₅-C₁₂-Cycloalkylrest, ein substituierter oder nicht substituierter C₆-C₁₄-Arylrest,
m = 2 bis 4,
n = 1 bis 250,
Z = 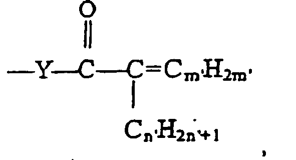
Y = O oder NR²,
R² = Wasserstoff, C₁₋₁₂-Alkylrest, C₆-C₁₄-Arylrest, 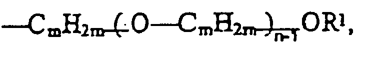
m' = 1 bis 4 und
n' = 0 bis 2
bedeuten,
mit einer ethylenisch ungesättigten Monomer-Verbindung (B) der allgemeinen Formel (II), 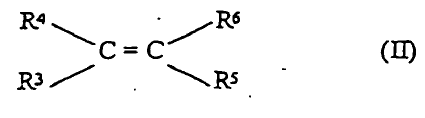 wobei
R³ = H, CH₃, COOH oder deren Salze, COOR⁷ oder CONR⁷R⁷,
R⁴ = H, ein substituierter oder nicht substituierter C₆-C₁₄-Arylrest,
R⁵ = H, CH₃, COOH oder deren Salze. COOR⁷, CONR⁷R⁷, einen substituierten oder nicht substituierten Arylrest oder OR⁸, PO₃H₂, SO₃H, CONH-R⁹,
R⁶ = H, CH₃ oder CH₂COOR⁷,
R⁷ = H, C₁-C₁₂-Alkyl, C₁-C₁₂-Hydxoxyalkyl, C₁-C₁₂-Alkylphosphat oder - phosphonat und deren Salze, C₁-C₁₂-Alkylsulfat oder -sulfonat und deren Salze, 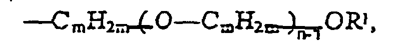
R⁸ = Acetyl sowie
R⁹ = C₁-C₁₂-Alkylphosphat oder -phosphonat und deren Salze, C₁-C₁₂-Alkylsulfat oder -sulfonat und deren Salze,
R³ und R⁵ zusammen -O-CO-O-
bedeuten,
nach der "Catalytical Chain Transfer (CCT)"-Methode,
als Dispergiermittel für wässrige Feststoff-Suspensionen.

2. Verwendung nach Anspruch 1, **dadurch gekennzeichnet, dass** die Arylreste für R¹ mit Hydroxyl-, Carboxyl- oder/und SulfonsäureGruppen substituiert sind.

3. Verwendung nach Anspruch 1 oder 2, **dadurch gekennzeichnet, dass** in der Formel (I) m = 2 oder 3 und n = 5 bis 250 bedeuten.

4. Verwendung nach einem der Ansprüche 1 bis 3, **dadurch gekennzeichnet, dass** in Formel (I) m' = 1 und n' = 0 oder 1 bedeuten.

5. Verwendung nach einem der Ansprüche 1 bis 4, **dadurch gekennzeichnet, dass** in Formel (II) R³ und R⁴ = H, R⁶ = H, CH₃ und R⁵ = COOR⁷, PO₃H₂ oder CONH-R⁹-SO₃H bedeuten.

6. Verwendung nach einem der Ansprüche 1 bis 5, **dadurch gekennzeichnet, dass** in Formel (II) R⁸ und R⁴ = H, R⁶ = CH₃, R⁵ = COOH bzw. deren Salze oder COOR⁷ sowie R⁷ = C₁-C₆-Hydroxyalkyl bedeuten.

7. Verwendung nach einem der Ansprüche 1 bis 6, **dadurch gekennzeichnet, dass** R⁵ ein Carbonsäure-Salz, ausgewählt aus Alkali-, Erdalkali- oder Ammoniumsalzen, ist.

8. Verwendung nach einem der Ansprüche 1 bis 7, **dadurch gekennzeichnet, dass** die molaren Verhältnisse der vinylischen Poly(alkylenoxid-)Verbindung (A) mit der ethylenisch ungesättigten Monomer-Verbindung (B) auf 1 : 0,01 bis 1 : 100, vorzugsweise 1 : 0,1 bis 1 : 50, eingestellt wurden.

9. Verwendung nach einem der Ansprüche 1 bis 8, **dadurch gekennzeichnet, dass** die Kammpolymere in einer Menge von 0,01 bis 5 Gew.-%, bezogen auf die Feststoff-Suspension, eingesetzt werden.

10. Verwendung nach einem der Ansprüche 1 bis 9, **dadurch gekennzeichnet, dass** die Feststoff-Suspension hydraulische Bindemittel auf Basis von Zement, Kalk, Gips und Anhydrit enthält.

11. Verwendung nach einem der Ansprüche 1 bis 10, **dadurch gekennzeichnet, dass** die Feststoff-Suspension anorganische Partikel, ausgewählt aus der Gruppe Gesteinsmehl, Silikatmehl, Kreide, Tone, Porzellanschlicker, Talkum, Pigmente und Ruß enthält.

## Claims

1. Use of random comb polymers which can be obtained by free-radical copolymerization of a vinylic poly(alkylene oxide) compound (A) of the general formula (I),
R¹ - O - (CₘH₂ₘO)ₙ₋₁ - CₘH₂ₘ - Z (I)
in which
R¹ = hydrogen, a C₁-C₂₀ alkyl residue, a cycloaliphatic C₅-C₁₂ cycloalkyl residue, a substituted or non-substituted C₆-C₁₄ aryl residue,
m = 2 to 4,
n = 1 to 250,
Z= 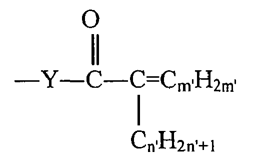
Y = O or NR² ,
R² = hydrogen, a C₁₋₁₂ alkyl residue, a C₆-C₁₄ aryl residue,
-CₘH₂ₘ-(O-CₘH₂ₘ)ₙ₋₁-OR ¹
m' = 1 to 4 and
n' = 0 to 2
with an ethylenically unsaturated monomer compound (B) of the general formula (II) 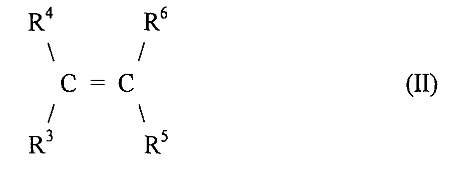 in which
R³ = H, CH₃, COOH or salts thereof, COOR⁷ or CONR⁷R⁷,
R⁴ = H, a substituted or non-substituted C₆-C₁₄ aryl residue,
R⁵ = H, CH₃, COOH or salts thereof, COOR⁷, CONR⁷R⁷, a substituted or non-substituted aryl residue or OR⁸, PO₃H₂, SO₃H, CONH-R⁹
R⁶ = H, CH₃ or CH₂COOR⁷,
R⁷ = H, C₁-C₁₂ alkyl, C₁-C₁₂ hydroxyalkyl, C₁-C₁₂ alkyl phosphate or C₁-C₁₂ alkyl phosponate and salts thereof, C₁-C₁₂ alkyl sulfate or C₁-C₁₂ alkyl sulfonate and salts thereof,
-CₘH₂ₘ-(O-CₘH₂ₘ)ₙ₋₁-OR¹
R⁸ = acetyl and
R⁹ = C₁-C₁₂ alkyl phosphate or C₁-C₁₂ alkyl phosphonate and salts thereof, C₁-C₁₂ alkyl sulfate or C₁-C₁₂ alkyl sulfonate and salts thereof,
R³ and R⁵ together denote -O-CO-O-
by the catalytical chain transfer (CCT) method, as dispersants for aqueous suspensions of solids.

2. Use according to claim 1, **characterized in that** the aryl residues R¹ are substituted by hydroxyl, carboxyl or/and sulfonic acid groups.

3. Use according to claim 1 or 2, **characterized in that** m = 2 or 3 and n = 5 to 250 in formula (I).

4. Use according to one of the claims 1 to 3, **characterized in that** m' = 1 and n' = 0 or 1 in formula (I).

5. Use according to one of the claims 1 to 4, **characterized in that** R³ and R⁴ = H, R⁶ = H, CH₃ and R⁵ = COOR⁷, PO₃H₂ or CONH-R⁹-SO₃H in formula (II).

6. Use according to one of the claims 1 to 5, **characterized in that** in formula (II) R³ and R⁴ = H, R⁶ = CH₃, R⁵ = COOH or salts thereof or COOR⁷ and R⁷ =C₁-C₆ hydroxyalkyl.

7. Use according to one of the claims 1 to 6, **characterized in that** R⁵ is a carboxylic acid salt selected from alkali, alkaline earth or ammonium salts.

8. Use according to one of the claims 1 to 7, **characterized in that** the molar ratios of the vinylic poly(alkylene oxide) compound (A) to the ethylenically unsaturated monomer compound (B) have been set to 1 : 0.01 to 1 : 100, preferably to 1 : 0.1 to 1 : 50.

9. Use according to one of the claims 1 to 8, **characterized in that** the comb polymers are used in an amount of 0.01 1 to 5 % by weight based on the suspension of solids.

10. Use according to one of the claims 1 to 9, **characterized in that** the suspension of solids contains hydraulic binders based on cement, lime, gypsum and anhydrite.

11. Use according to one of the claims 1 to 10, **characterized in that** the solids suspension contains inorganic particles which are selected from the group comprising mineral powder, ground silicate, chalk, clays, porcelain slips, talcum, pigments and carbon black.

## Revendications

1. Utilisation de polymères en peigne statistiques susceptibles d'être obtenus par copolymérisation radicalaire d'un poly(alkylène oxyde) vinylique (A) de formule générale (I), 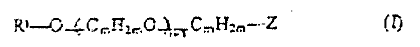 dans laquelle
R¹ = un atome d'hydrogène, un groupe alkyle en C₁ à C₂₀, un groupe cycloalkyle en C₅ à C₁₂ cyclo-aliphatique, un groupe aryle en C₆ à C₁₄ substitué ou non substitué,
m=2 à 4,
n= 1 à 250,
Z = 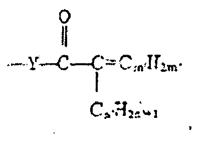 Y = O ou NR²,
R² = un atome d'hydrogène, un groupe alkyle en C₁ à C₁₂, un groupe aryle en C₆ à C₁₄, un groupe de formule 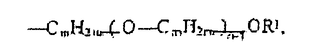 m'= 1 à 4 et
n' = 0 à 2,
avec un monomère à insaturation éthylénique (B) de formule générale (II) 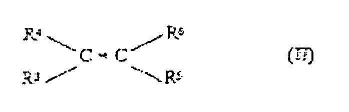 dans laquelle R³ = H, CH₃, COOH ou un ses de ceux-ci, COOR⁷ ou CONR⁷R⁷,
R⁴ = H, un groupe aryle en C₆ à C₁₄ substitué ou non substitué,
R⁵ = H, CH₃, COOH ou un sel de ceux-ci, COOR⁷, CONR⁷R⁷, un groupe aryle substitué ou non substitué ou OR⁸, PO₃H₂, SO₃H, CONH-R⁹,
R⁶ = H, CH₃ ou CH₂COOR⁷,
R⁷ = H, un groupe alkyle en C₁ à C₁₂, hydroxyalkyle en C₁ à C₁₂, alkyl-phosphate ou -phosphonate en C₁ à C₁₂ et leurs sels, alkyl-sulfate ou -sulfonate en C₁ à C₁₂ et leurs sels, un groupe de formule 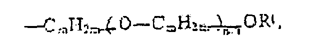 R⁸ = un groupe acétyle ou
R⁹ = un groupe alkylphosphate ou -phosphonate en C₁ à C₁₂ et leurs sels, alkylsulfate ou -sulfonate en C₁ à C₁₂ et leurs sels,
R³ et R⁵ sont conjointement -O-CO-O-
selon le procédé de "Catalytical Chain Transfer (CCT)", comme dispersant pour suspensions aqueuses de solides.

2. Utilisation selon la revendication 1, **caractérisée en ce que** les groupes aryle pour R¹ sont substitués par des groupes hydroxyle, carboxyle et/ou acide sulfonique.

3. Utilisation selon la revendication 1 ou 2, **caractérisée en ce que**, dans la formule (I), m = 2 ou 3 et n = 5 à 250.

4. Utilisation selon l'une quelconque des revendications 1 à 3, **caractérisée en ce que**, dans la formule (I), m' = 1 et n' = 0 ou 1.

5. Utilisation selon l'une quelconque des revendications 1 à 4, **caractérisée en ce que**, dans la formule (II), R³ et R⁴ = H, R⁶ = H, CH₃ et R⁵ = COOR⁷, PO₃H₂ ou CONH-R⁹-SO₃H.

6. Utilisation selon l'une quelconque des revendications 1 à 5, **caractérisée en ce que**, dans la formule (II), R³ et R⁴ = H, R⁶ = CH₃, R⁵ = COOH ou leurs sels ou COOR⁷ et R⁷ = un groupe hydroxyalkyle en C₁ à C₆.

7. Utilisation selon l'une quelconque des revendications 1 à 6, **caractérisée en ce que** R⁵ est un sel d'acide carboxylique choisi parmi les sels de métaux alcalins et alcalino-terreux et les sels d'ammonium.

8. Utilisation selon l'une quelconque des revendications 1 à 7, **caractérisée en ce que** le rapport molaire du poly(alkylène-oxyde) vinylique (A) au monomère à insaturation éthylénique (B) est compris entre 1:0,01 et 1:100, de préférence, entre 1:0,1 et 1:50.

9. Utilisation selon l'une quelconque des revendications 1 à 8, **caractérisée en ce que** les polymères en peigne sont utilisés en une quantité de 0,01 à 5 % en poids par rapport à la suspension de solides.

10. Utilisation selon l'une quelconque des revendications 1 à 9, **caractérisée en ce que** la suspension de solides contient des liants hydrauliques à base de ciment, de chaux, de plâtres et d'anhydrite.

11. Utilisation selon l'une quelconque des revendications 1 à 10, **caractérisée en ce que** la suspension de solides contient des particules minérales choisies dans le groupe formé par la farine de roche, la farine de silicate, la craie, l'argile, une suspension de kaolin, le talc, les pigments et le noir de carbone.
